(19) Europäisches Patentamt
European Patent Office
Office européen des brevets

(11) **EP 4 174 344 A1**

(12) **EUROPÄISCHE PATENTANMELDUNG**

(43) Veröffentlichungstag:
03.05.2023 Patentblatt 2023/18

(21) Anmeldenummer: **22204441.4**

(22) Anmeldetag: **28.10.2022**

(51) Internationale Patentklassifikation (IPC):
**F16H 61/4008** (2010.01) **F16H 61/421** (2010.01)
**F16H 61/431** (2010.01) **F16H 61/47** (2010.01)

(52) Gemeinsame Patentklassifikation (CPC):
**F16H 61/421; F16H 61/4008; F16H 61/431; F16H 61/47;** F16H 59/44; F16H 2059/6861

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **02.11.2021 DE 102021212329**

(71) Anmelder: **Robert Bosch GmbH**
**70442 Stuttgart (DE)**

(72) Erfinder:
• **Lenzgeiger, Ulrich**
**86424 Dinkelscherben (DE)**
• **Voelk, Peter**
**89073 Ulm (DE)**
• **Bender, Frank**
**70190 Stuttgart (DE)**
• **Passenberg, Carolina**
**71277 Rutesheim (DE)**
• **Spang, Joerg**
**89233 Neu-Ulm (DE)**

(54) **VERFAHREN ZUR REGELUNG EINES HYDRAULISCHEN ANTRIEBS EINES FAHRZEUGS, STEUEREINHEIT, COMPUTERPROGRAMM UND MASCHINENLESBARES SPEICHERMEDIUM**

(57) Die Offenbarung betrifft ein Verfahren zur Regelung eines hydraulischen Antriebs (1) eines Fahrzeugs, welcher wenigstens eine Hydromaschine (4; 6) mit einem verstellbaren Verdrängungsvolumen hat. Das Verfahren weist folgende Schritte auf: Erfassen einer Ist-Geschwindigkeit ($v_{ist}$) des Fahrzeugs und einer Soll-Geschwindigkeit ($v_{soll}$) des Fahrzeugs; Regeln eines Soll-Verdrängungsvolumens oder eines mechanischen Soll-Äquivalents ($\alpha_{soll}$) in Abhängigkeit der Ist-Geschwindigkeit ($v_{ist}$) des Fahrzeugs und der Soll-Geschwindigkeit ($v_{soll}$) des Fahrzeugs; Kategorisieren des Soll-Verdrängungsvolumens oder des mechanischen Soll-Äquivalents ($\alpha_{soll}$) anhand eines Grenzwerts; und wahlweise bei einer Kategorisierung des Soll-Verdrängungsvolumens in eine erste Kategorie, Regeln einer Betriebsgröße des hydraulischen Antriebs (1) in Abhängigkeit eines Ist-Werts der Betriebsgröße ($p_{ist}$) und des Grenzwerts; oder bei einer Kategorisierung des Soll-Verdrängungsvolumens in eine von der ersten Kategorie unterschiedliche zweite Kategorie, Regeln der Betriebsgröße in Abhängigkeit des Ist-Werts der Betriebsgröße ($p_{ist}$) und entweder des Soll-Verdrängungsvolumens oder des mechanischen Soll-Äquivalents ($\alpha_{soll}$). Die Offenbarung betrifft des Weiteren eine entsprechende Steuereinheit (8), ein entsprechendes Computerprogramm und ein entsprechendes maschinenlesbares Speichermedium.

Fig. 2

EP 4 174 344 A1

**Beschreibung**

Technisches Gebiet

Die vorliegende Offenbarung betrifft ein Verfahren zur Regelung eines hydraulischen Antriebs eines Fahrzeugs, eine Steuereinheit, ein Computerprogramm und ein computerlesbares Speichermedium.

Stand der Technik

Bekannte hydraulische Antriebe eines Fahrzeugs, wie sie in mobilen Arbeitsmaschinen zum Einsatz kommen, weisen grundsätzlich eine Kombination einer oder mehrerer Hydraulikquellen, insbesondere Hydromaschinen in Form von Hydraulikpumpen, und einer oder mehrerer hydraulischer Verbraucher, insbesondere Hydromaschinen in Form von Hydraulikmotoren, auf. Die Hydromaschinen bekannter hydraulischer Antriebe sind üblicherweise elektronisch ansteuerbar, so dass ein jeweiliges Verdrängungsvolumen (bzw. bei einer Hydraulikpumpe ein Fördervolumen und bei einem Hydraulikmotor ein Schluckvolumen) verstellbar ist. Üblicherweise wird bei einem hydraulischen Antrieb eine Hydraulikpumpe elektrisch direkt gesteuert und ein Hydraulikmotor elektrisch proportional gesteuert.
Bekannte Verfahren zur Steuerung von Hydraulikpumpen werden beispielsweise in DE 10 2013 213 896 A1, DE 10 2013 217 708 A1, DE 10 2015 207 258 A1 und DE 10 2019 210 003 A1 offenbart.

Zusammenfassung der Offenbarung

Das Problem bisheriger Verfahren zur Regelung hydraulischer Antriebe von Fahrzeugen ist, dass sich die Geschwindigkeit der Fahrzeuge unter der Einwirkung von äußeren Kräften bzw. Lasten oder Fahrprofilen (Ebene, Gefälle, Steigung) ändert.
Aufgabe der vorliegenden Erfindung ist es deshalb, ein Verfahren zur Regelung eines hydraulischen Antriebs eines Fahrzeugs, eine Steuereinheit, ein Computerprogramm und ein maschinenlesbares Speichermedium bereitzustellen, mittels derer ermöglicht wird, ungewollte Geschwindigkeitsfluktuationen eines hydraulischen Antriebs zu unterbinden oder zumindest zu minimieren.
Diese Aufgabe wird bezüglich des Verfahrens durch die Merkmale des Anspruchs 1, bezüglich der Steuereinheit durch die Merkmale des Anspruchs 7, bezüglich des Computerprogramms durch die Merkmale des Anspruchs 9 und bezüglich des maschinenlesbaren Speichermediums durch die Merkmale des Anspruchs 10 gelöst. Vorteilhafte Weiterbildungen sind Gegenstand der Unteransprüche.
Ein offenbarungsgemäßes Verfahren zur Regelung eines hydraulischen Antriebs eines Fahrzeugs, welcher wenigstens eine Hydromaschine mit einem verstellbaren Verdrängungsvolumen hat, weist folgende Schritte auf:

- Erfassen einer Ist-Geschwindigkeit des Fahrzeugs und einer Soll-Geschwindigkeit des Fahrzeugs;
- Regeln eines Soll-Verdrängungsvolumens oder eines mechanischen Soll-Äquivalents in Abhängigkeit der Ist-Geschwindigkeit des Fahrzeugs und der Soll-Geschwindigkeit des Fahrzeugs;
- Kategorisieren des Soll-Verdrängungsvolumens oder des mechanischen Soll-Äquivalents anhand eines Grenzwerts; und wahlweise
- bei einer Kategorisierung des Soll-Verdrängungsvolumens in eine erste Kategorie, Regeln einer Betriebsgröße des hydraulischen Antriebs, insbesondere einer Betriebsgröße, welche sich mittel- oder unmittelbar auf die Ist-Geschwindigkeit des Fahrzeugs auswirkt bzw. auswirken kann, in Abhängigkeit eines Ist-Werts der Betriebsgröße und des Grenzwerts; oder
- bei einer Kategorisierung des Soll-Verdrängungsvolumens in eine von der ersten Kategorie unterschiedliche zweite Kategorie, Regeln der Betriebsgröße in Abhängigkeit des Ist-Werts der Betriebsgröße und entweder des Soll-Verdrängungsvolumens oder des mechanischen Soll-Äquivalents.

Die Hydromaschine kann eine Hydraulikpumpe oder ein Hydraulikmotor sein. Insbesondere kann die Hydromaschine eine Axialkolbenmaschine in Form einer Schrägachsenmaschine oder einer Schrägscheibenmaschine sein.
Die Hydromaschine bzw. die Axialkolbenmaschine kann insbesondere derart ausgebildet sein, dass das Verdrängungsvolumen mittels Verstellen eines Schwenkwinkels, insbesondere einer Schrägscheibe oder einer Schrägachse der Hydromaschine, verstellt werden kann. Der Schwenkwinkel entspräche einem offenbarungsgemäßen mechanischen Äquivalent bzw. ein offenbarungsgemäßes mechanisches Soll-Äquivalent entspräche einem Soll-Schwenkwinkel.
Das Erfassen der Ist-Geschwindigkeit des Fahrzeugs kann mittels bekannter Tachometer bzw. bekannter Geschwindigkeitsmesser erfolgen. Das Erfassen der Soll-Geschwindigkeit des Fahrzeugs kann mittels bekannter Mensch-Maschinen-Schnittstellen erfolgen. Beispielsweise kann eine Fahrpedalstellung und/oder eine Stellung eines Fahrmodusschalters erfasst werden und kann daraus eine Soll-Geschwindigkeit des Fahrzeugs ermittelt werden.

Kategorisieren des Soll-Verdrängungsvolumens oder des mechanischen Soll-Äquivalents anhand eines Grenzwerts bedeutet insbesondere, dass das Soll-Verdrängungsvolumen oder das mechanische Soll-Äquivalent mit dem Grenzwert verglichen wird, und entsprechend dem Ergebnis des Vergleichs der ersten Kategorie oder der zweiten Kategorie zugeordnet wird.

Das Kategorisieren des Soll-Verdrängungsvolumens oder des mechanischen Soll-Äquivalents und das entsprechend dem Kategorisieren des Soll-Verdrängungsvolumens oder des mechanischen Soll-Äquivalents erfolgende Regeln der Betriebsgröße (wahlweise einerseits in Abhängigkeit des Grenzwerts oder andererseits in Abhängigkeit des Soll-Verdrängungsvolumens oder des mechanischen Soll-Äquivalents) können gleichzeitig erfolgen. Das heißt, ein Kategorisieren des Soll-Verdrängungsvolumens oder des mechanischen Soll-Äquivalents kann mittels des wahlweisen Regelns der Betriebsgröße umgesetzt bzw. angezeigt werden.

Zur Ansteuerung der Hydromaschine kann das Soll-Verdrängungsvolumen oder das Soll-Äquivalent insbesondere in einen Soll-Stellstrom für die Hydromaschine umgerechnet werden.

Durch die wahlweise Berücksichtigung der Ist-Geschwindigkeit und der Soll-Geschwindigkeit des Fahrzeugs über das Soll-Verdrängungsvolumen oder das mechanische Soll-Äquivalent bei der Regelung der Betriebsgröße des hydraulischen Antriebs ist es in vorteilhafter Weise möglich, durch Schwankungen der Betriebsgröße verursachte Geschwindigkeitsfluktuationen zu minimieren.

Gemäß einem Aspekt der Offenbarung kann für das Kategorisieren des Soll-Verdrängungsvolumens oder des mechanischen Soll-Äquivalents das Soll-Verdrängungsvolumen oder das mechanische Äquivalent in ein bezüglich der Betriebsgröße dimensionsgleiches Betriebsgrößen-Äquivalent umgerechnet werden und kann der Grenzwert bezüglich der Betriebsgröße dimensionsgleich sein.

Die Umrechnung des Soll-Verdrängungsvolumens oder des mechanischen Soll-Äquivalents in das Betriebsgrößen-Äquivalent kann insbesondere mittels Kennfeldern und/oder Tabellen erfolgen, welche in einem Speicher hinterlegt sind.

Wird das Soll-Verdrängungsvolumen oder das mechanische Soll-Äquivalent in das Betriebsgrößen-Äquivalent umgerechnet, kann in vorteilhafter Weise auf Sensoren für die Berechnung des Verdrängungsvolumens oder des mechanischen Äquivalents, beispielsweise auf einen Sensor für den Schwenkwinkel einer Axialkolbenmaschine, verzichtet werden.

Gemäß einem Aspekt der Offenbarung kann für das Kategorisieren des Soll-Verdrängungsvolumens oder des mechanischen Soll-Äquivalents das Betriebsgrößen-Äquivalent mit dem Grenzwert verglichen werden, kann das Soll-Verdrängungsvolumen oder das mechanische Äquivalent der ersten Kategorie zugeordnet werden, wenn das Betriebsgrößen-Äquivalent größer oder gleich dem Grenzwert ist, und kann das Soll-Verdrängungsvolumen oder das mechanische Äquivalent der zweiten Kategorie zugeordnet werden, wenn das Betriebsgrößen-Äquivalent kleiner als der Grenzwert ist.

Mittels des Vergleichsvorgangs kann das Kategorisieren des Soll-Verdrängungsvolumens oder des mechanischen Soll-Äquivalents auf einfache Weise umgesetzt werden.

Gemäß einem Aspekt der Offenbarung kann die Betriebsgröße ein Druck der Hydromaschine oder ein Differenzdruck über die Hydromaschine sein.

Wird der Druck der Hydromaschine bzw. der ein Differenzdruck über die Hydromaschine bei der Regelung der Geschwindigkeit herangezogen, kann in vorteilhafter Weise auf Sensoren für die Berechnung des Verdrängungsvolumens oder des mechanischen Äquivalents, beispielsweise auf einen Sensor für den Schwenkwinkel einer Axialkolbenmaschine, verzichtet werden.

Gemäß einem Aspekt der Offenbarung können für das Regeln des Soll-Verdrängungsvolumens oder des mechanischen Soll-Äquivalents aus der Soll-Geschwindigkeit des Fahrzeugs eine erste Ableitung der Soll-Geschwindigkeit und eine zweite Ableitung der Soll-Geschwindigkeit berechnet werden, kann aus der Soll-Geschwindigkeit des Fahrzeugs, der ersten Ableitung der Soll-Geschwindigkeit und der zweiten Ableitung der Soll-Geschwindigkeit mittels eines inversen Modells des Fahrzeugs das Soll-Verdrängungsvolumen oder das mechanische Soll-Äquivalent berechnet werden und können Abweichungen zwischen der Ist-Geschwindigkeit und der Soll-Geschwindigkeit mittels eines Reglers ausgeregelt werden, dessen Ausgang vor dem inversen Modell des Fahrzeugs auf die zweite Ableitung der Soll-Geschwindigkeit aufgerechnet wird.

Das inverse Modell des Fahrzeugs ist insbesondere ein invertiertes Modell der Punktmassendynamik des Fahrzeugs, welches sich insbesondere auf eine vereinfachte Längsdynamik des Fahrzeugs beschränkt. Alternativ kann auch ein komplexeres Modell zur Anwendung kommen.

Gemäß einem Aspekt der Offenbarung kann der Regler für das Ausregeln von Abweichungen zwischen der Ist-Geschwindigkeit und der Soll-Geschwindigkeit ein PID-Regler mit Anti-Wind-Up sein.

Durch Verwendung eines PID-Reglers mit Anti-Wind-Up kann in vorteilhafter Weise die Dynamik des Regelns des Soll-Verdrängungsvolumens oder des mechanischen Soll-Äquivalents verbessert werden.

Eine offenbarungsgemäße Steuereinheit ist dazu eingerichtet, ein offenbarungsgemäßes Verfahren durchzuführen, und weist einen Geschwindigkeitsregler und einen Pumpenregler auf. Der Geschwindigkeitsregler ist ausgebildet, das Soll-Verdrängungsvolumen oder das mechanische Soll-Äquivalent in Abhängigkeit der Ist-Geschwindigkeit des Fahrzeugs und der Soll-Geschwindigkeit des Fahrzeugs zu regeln. Der Pumpenregler ist ausgebildet, die Betriebsgröße des hydraulischen Antriebs in Abhängigkeit des Ist-Werts der Betriebsgröße und wahlweise des Grenzwerts oder entweder des Soll-Verdrängungsvolumens oder des mechanischen Soll-Äquivalents zu regeln.

Gemäß einem Aspekt der Offenbarung kann der Geschwindigkeitsregler einen Trajektorienplaner, ein inverses Modell des Fahrzeugs und einen Regler aufweisen. Der Trajektorienplaner kann ausgebildet sein, aus der Soll-Geschwindigkeit des Fahrzeugs eine erste Ableitung der Soll-Geschwindigkeit und eine zweite Ableitung der Soll-Geschwindigkeit berechnen zu können. Das inverse Modell des Fahrzeugs kann ausgebildet sein, aus der Soll-Geschwindigkeit des Fahrzeugs, der ersten Ableitung der Soll-Geschwindigkeit und der zweiten Ableitung der Soll-Geschwindigkeit das Soll-Verdrängungsvolumen oder das mechanische Soll-Äquivalent berechnen zu können. Der Regler kann ausgebildet sein, Abweichungen zwischen der Ist-Geschwindigkeit und der Soll-Geschwindigkeit ausregeln zu können und einen Ausgang des Reglers vor dem inversen Modell des Fahrzeugs auf die zweite Ableitung der Soll-Geschwindigkeit aufzurechnen.

Die offenbarungsgemäße Steuereinheit wird beispielsweise durch eine externe Ansteuerhardware, wie ein Steuergerät oder eine ECU und ein elektrisch verbundenes Ansteuergerät für die Hydraulikmaschine realisiert. Das Ansteuergerät ist dabei vorzugsweise ein elektrisch direktgesteuertes Druckregelventil, insbesondere Druckreduzierventil, über das beispielsweise ein Kolbenraum eines Stellzylinders mit Stelldruckmittel beaufschlagbar ist, von dem die oben genannte Schrägscheibe angelenkt ist.

Ein offenbarungsgemäßes Computerprogramm ist ausgebildet, einen Prozessor mit Hardware zu den Schritten nach einem offenbarungsgemäßen Verfahren zu veranlassen.

Ein offenbarungsgemäßes maschinenlesbares Speichermedium weist ein darauf gespeichertes offenbarungsgemäßes Computerprogramm auf.

Kurzbeschreibung der Zeichnungen

Die vorliegende Erfindung wird im Folgenden anhand eines bevorzugten Ausführungsbeispiels unter Bezugnahme auf die beigefügten Zeichnungen näher beschrieben. Es zeigen:

Fig. 1 eine schematische Ansicht eines geschlossenen hydrostatischen Kreislaufs;

Fig. 2 eine schematische Ansicht eines offenbarungsgemäßen Zusammenspiels einer Steuereinheit und eines Fahrantriebs; und

Fig. 3 eine schematische Ansicht eines offenbarungsgemäßen Geschwindigkeitsreglers;

Detaillierte Beschreibung bevorzugter Ausführungsformen

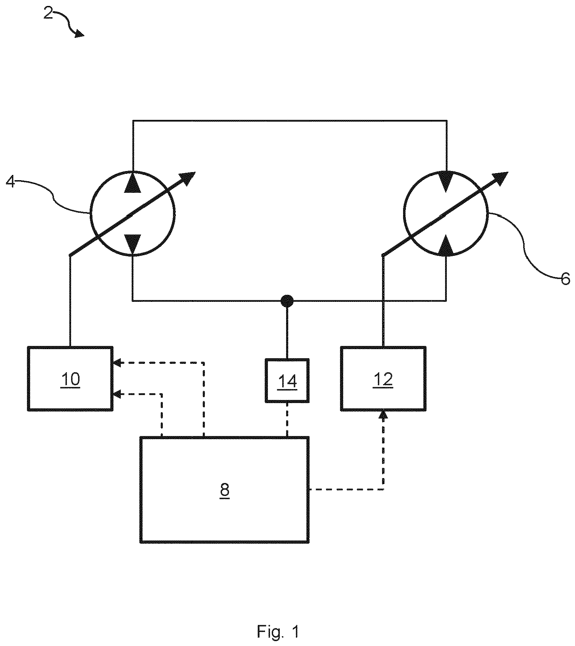

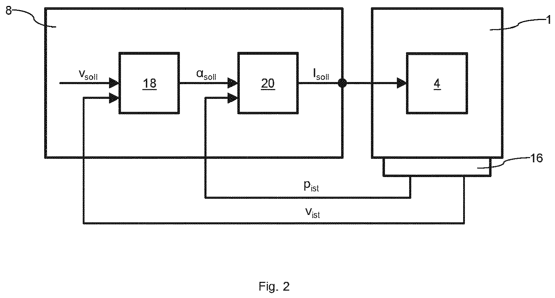

Fig. 1 zeigt eine schematische Ansicht eines geschlossenen hydrostatischen Kreislaufs 2 eines Fahrantriebs 1 (siehe Fig. 2). Der hydrostatische Kreislaufs 2 weist eine offenbarungsgemäße Hydromaschine in Form einer Hydraulikpumpe 4 und eine Hydromaschine in Form eines Hydraulikmotors 6 auf.

Eine elektronische Steuereinheit 8 ist über eine Pumpenansteuerungsmechanik 10 mit der Hydraulikpumpe 4 verbunden und über eine Motoransteuerungsmechanik 12 mit dem Hydraulikmotor 6 verbunden. Des Weiteren ist die Steuereinheit 8 mit einem Drucksensor 14 verbunden, mittels dessen der Druck in dem geschlossenen hydrostatischen Kreislauf 2 gemessen werden kann.

Die Hydraulikpumpe 4 wird von der Steuereinheit 8 und der Pumpenansteuerungsmechanik 10 elektrisch proportional angesteuert. Der Hydraulikmotor 6 wird von der Steuereinheit 8 und der Motoransteuerungsmechanik 12 elektrisch direktgesteuert.

Fig. 2 zeigt eine schematische Ansicht der Steuereinheit 8 im Zusammenspiel mit der Hydraulikpumpe 4 des Fahrantriebs 1. Um $p_{ist}$, einen Ist-Wert der Betriebsgröße Druck, und $v_{ist}$, eine Ist-Geschwindigkeit eines mit dem Fahrantrieb 1 ausgestatteten Fahrzeugs, messen zu können, weist der Fahrantrieb 1 eine Sensorik 16 auf. Die Steuereinheit 8 weist einen Geschwindigkeitsregler 18 und einen Pumpenregler 20 auf.

Um die Hydraulikpumpe 4 anzusteuern, ist die Steuereinheit 8 ausgebildet, mittels des Geschwindigkeitsreglers 18 und des Pumpenreglers 20 eine kaskadierte Regelung auszuführen.

Der Geschwindigkeitsregler 18 ist ausgebildet, eine Soll-Geschwindigkeit $v_{soll}$ des mit dem Fahrantrieb 1 ausgestatteten Fahrzeugs in einen Soll-Schwenkwinkel $\alpha_{soll}$ der Hydraulikpumpe 4 umzusetzen. Der Pumpenregler 20 ist ausgebildet, den Soll-Schwenkwinkel $\alpha_{soll}$ in einen Soll-Strom $I_{soll}$, zur Ansteuerung der Hydraulikpumpe 4 zu überführen.

Der Geschwindigkeitsregler 18 ist dem Pumpenregler 20 kaskadiert überlagert bzw. vorgelagert. Das heißt, der Pumpenregler 20 regelt in einer inneren Schleife anhand des von der Sensorik 16 ermittelten Ist-Werts des Drucks

$p_{ist}$ und des von dem Geschwindigkeitsregler 18 ausgegebenen Soll-Schwenkwinkels $\alpha_{soll}$ den Soll-Strom $I_{soll}$, und somit mittelbar den Druck in dem geschlossenen hydrostatischen Kreislauf 2. Der Geschwindigkeitsregler 18 regelt in einer äußeren Schleife anhand der von der Sensorik 16 ermittelten Ist-Geschwindigkeit $v_{ist}$ und der Soll-Geschwindigkeit $V_{soll}$, die beispielsweise mittels eines (nicht gezeigten) Fahrpedalsensors ermittelt wird, den Soll-Schwenkwinkel $\alpha_{soll}$, der als Eingangswert in den Pumpenregler 20 eingespeist wird.

Die kaskadierte Regelung ist möglich, da die Geschwindigkeit des Fahrzeugs eine wesentlich langsamere Dynamik als der Druck des Fahrantriebs 1 hat. Die kaskadierte Regelung ermöglicht es, Vorgaben und Beschränkungen für die Geschwindigkeit des Fahrzeugs, den Schwenkwinkel und den Druck des Fahrantriebs 1 gleichzeitig einzuhalten. Die Überlagerung des Geschwindigkeitsreglers 18 bietet ferner den Vorteil, dass Abweichungen in der Schwenkwinkelsteuerung des Pumpenreglers 20 automatisch ausgeglichen werden.

Das Erreichen einer Beschränkung einer innenliegenden Vorgabe (z.B. Drucklimit) führt in bestimmten Situationen dazu, dass die Vorgaben des äußeren Kreises (z.B. Geschwindigkeit) nicht mehr eingehalten werden können. Daher ist in der offenbarungsgemäßen Steuereinheit 8 ein Grenzwert vorgegeben, anhand dessen die Umsetzbarkeit der Vorgaben des äußeren Kreises bestimmt wird bzw. vorbestimmt ist. Wenn der von dem Geschwindigkeitsregler 18 ausgegebene Soll-Schwenkwinkel $\alpha_{soll}$ größer oder gleich dem in der Steuereinheit 8 vorgegebenen Grenzwert ist, dann wird die Regelung in dem Pumpenregler 20 anhand des Grenzwerts und der Ist-Geschwindigkeit $v_{ist}$ durchgeführt. Wenn der von dem Geschwindigkeitsregler 18 ausgegebene Soll-Schwenkwinkel $\alpha_{soll}$ kleiner als der in der Steuereinheit 8 vorgegebene Grenzwert ist, dann wird die Regelung in dem Pumpenregler 20 anhand des von dem Geschwindigkeitsregler 18 ausgegebenen Soll-Schwenkwinkels $\alpha_{soll}$ und der Ist-Geschwindigkeit $v_{ist}$ durchgeführt.

In der vorliegenden Konfiguration ist kein Schwenkwinkelsensor in der Hydraulikpumpe 4 verbaut, das heißt, der wahre Schwenkwinkel der Pumpe ist unbekannt. Daher wird jegliche Störgröße (bzw. Modellungenauigkeit) zu einer Abweichung zwischen Soll- und Istwert (Schwenkwinkel) führen. Diese Abweichungen werden durch die Überlagerung des Geschwindigkeitsreglers 18 dahingehend ausgeglichen, dass das Fahrzeug der gewählten Soll-Geschwindigkeit $v_{soll}$ folgt. Der dafür nötige Sollschwenkwinkel wird durch den Geschwindigkeitsregler 18 entsprechend eingestellt.

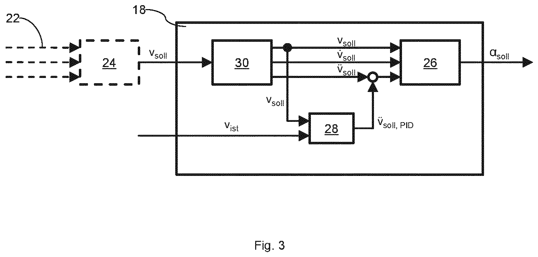

Fig. 3 zeigt eine schematische Ansicht des offenbarungsgemäßen Geschwindigkeitsreglers 18. Der Geschwindigkeitsregler 18 benötigt zunächst die Soll-Geschwindigkeit $v_{soll}$ am Eingang. Die Soll-Geschwindigkeit $v_{soll}$ wird aus Mensch-Maschine-Signalen 22 in einer Soll-Geschwindigkeit-Berechnungseinheit 24 berechnet.

Der Geschwindigkeitsregler 18 umfasst zwei Freiheitsgrade, das heißt, die Stellgröße wird als Summe aus einem Vorsteueranteil und einem Regleranteil berechnet. Für die Vorsteuerung wird ein inverses Modell 26 der Punktmassendynamik des Fahrzeugs und für den Regler wird ein PID-Regler 28 mit Anti-Wind-Up verwendet. Für das inverse Modell 26 (=Vorsteuerung) wird eine geplante Trajektorie benötigt, die neben dem Sollsignal (Soll-Geschwindigkeit $v_{soll}$) auch dessen erste Ableitung ($\dot{v}_{soll}$) und zweite Ableitung ($\ddot{v}_{soll}$) umfasst. Die Berechnung der Trajektorie wird daher in einem gesonderten Trajektorienplaner 30 berechnet.

Anders ausgedrückt umfasst der Geschwindigkeitsregler 18 zwei Freiheitsgrade, da er einerseits das invertierte Modell 26 der Punktmassendynamik des Fahrzeugs enthält und andererseits über den PID-Regler 28 Abweichungen zwischen Sollsignal und Istwert ausregelt.

Das inverse physikalische Modell 26 berechnet aus einer Soll-Geschwindigkeit $v_{soll}$ den Schwenkwinkel $\alpha_{soll}$ der Hydraulikpumpe 4. Das hier eingesetzte Modell 26 betrachtet nur eine vereinfachte Längsdynamik des Fahrzeugs. Diese und weitere Vereinfachungen bzw. Annahmen sind zur einfacheren Modellierung und Umsetzung dienlich, jedoch nicht zwingend nötig. Es können durchaus auch komplexere Modelle eingesetzt werden, was allerdings zu erhöhtem Rechenaufwand führt.

Für die Betrachtung der Längsdynamik wird das Gesamtfahrwiderstandsmoment $M_r$ aus Luftwiderstand $F_d = \rho_L \cdot c_W \cdot A_v \cdot (v_v)^2$ und Rollwiderstand $F_r = g \cdot m_v \cdot f_r$ abgeleitet, wobei $\rho_L$ die Dichte der Luft, cw der Strömungswider-standskoeffizient, $A_v$ die projizierte Stirnfläche des Fahrzeugs, $v_v$ die Geschwindigkeit des Fahrzeugs, g die Erdbe-schleunigung, $m_v$ die Masse des Fahrzeugs und $f_r$ der Rollwiderstandskoeffizient ist.

Das Modell 26 kann dann in Radkoordinaten (Radradius $r_w$) wie folgt geschrieben werden (Index v steht für fahrzeugspezifische Parameter, Index w steht für radspezifische Parameter):

$$J_v \dot{\omega}_w = T_{d,w} - M_r = T_{d,w} - r_w \cdot (F_d + F_r)$$

Das Massenträgheitsmoment $J_v$ wird direkt aus der genäherten Fahrzeugmasse $m_v$ und dem Radradius $r_w$ berechnet. Die Winkelgeschwindigkeit $\omega_w$ lässt sich aus der Fahrzeuggeschwindigkeit vv gemäß $\omega_w = r_w \cdot v_v$ errechnen.

Das Antriebsdrehmoment $T_{d,w}$ lässt sich an dem Hydraulikmotor 6 aus dessen Moment $T_M$ und dem Übersetzungsverhältnis i (zwischen Motor und Achse) wie folgt berechnen (Index M steht für motorspezifische Parameter, $V_{g,M}$ ist das Schluckvolumen des Hydraulikmotors 6, $\alpha_M$ ist der Schwenkwinkel des Hydraulikmotors 6, $\Delta p$ ist der Differenz-druck an dem Hydraulikmotor 6):

$$T_{d,w} = i \cdot T_M = i \cdot V_{g,M} \cdot \alpha_M \cdot \Delta p$$

Um den Soll-Schwenkwinkel $\alpha_{soll}$ der Hydraulikpumpe 4 in dem Modell 26 zu erhalten, wird die Dynamik abgeleitet:

$$(J_v / r_w) \cdot \ddot{v}_v = i \cdot \dot{T}_M - \dot{M}_r = i \cdot V_{g,M} \cdot (\alpha_M \cdot \Delta\dot{p} + \dot{\alpha}_M \cdot \Delta p) - \dot{M}_r$$

Mit Hilfe der Druckaufbaugleichung $\Delta\dot{p} = (\beta / V_H) \cdot (q_P - q_M - q_L)$, wobei $q_P$ der Pumpenvolumenstrom ist und sich gemäß $q_P = V_{g,P} \cdot \alpha_P \cdot \omega_P$ errechnet, $q_M$ der Motorvolumenstrom ist und $q_L$ die Gesamtleckage des hydrostatischen Fahrantriebs 1 ist, schreibt sich das Modell 26 wie folgt:

$$(J_v / r_w) \cdot \ddot{v}_v = i \cdot V_{g,M} \cdot (\alpha_M \cdot (\beta / V_H) \cdot (V_{g,P} \cdot \alpha_P \cdot \omega_P - q_M - q_L) + \dot{\alpha}_M \cdot \Delta p) - \dot{M}_r$$

$$\dot{M}_r = r_w \ (\dot{F}_d + \dot{F}_r)$$

Hiermit ergibt sich der gesuchte Zusammenhang zwischen der Geschwindigkeit $v_v$ bzw. deren zweiten Ableitung $\ddot{v}_v$ und dem Schwenkwinkel $\alpha_P$ der Hydraulikpumpe 4. Ein Umstellen der Gleichung nach dem nötigen Ausgang $\alpha_P$ ergibt das inverse Modell 26.

Wird in das inverse Modell 26 die Soll-Geschwindigkeit $v_{soll}$ eingespeist, ergibt sich der Soll-Schwenkwinkel $\alpha_{soll}$ der Hydraulikpumpe 4.

Da in dem inversen Modell 26 der Fahrzeugdynamik die zweite Ableitung $\ddot{v}_v$ der Geschwindigkeit benötigt wird, ist der Trajektorienplaner 30 erforderlich, um diese Größe bereit zu stellen. Hierfür kann beispielsweise ein Zustandsvariablenfilter zweiter Ordnung verwendet werden.

Zur Ausregelung von Abweichungen zwischen der Soll-Geschwindigkeit $\ddot{v}_{soll}$ und der gemessenen Ist-Geschwindigkeit $V_{ist}$ wird der PID-Regler 28 mit Anti-Windup eingesetzt. Der Ausgang des PID-Reglers 28 wird dabei auf die zweite Ableitung $\ddot{v}_{soll}$ der geplanten Trajektorie aufgerechnet und stellt damit einen neuen/veränderten Eingang für das inverse physikalische Modell 26 dar.

**Patentansprüche**

1. Verfahren zur Regelung eines hydraulischen Antriebs (1) eines Fahrzeugs, welcher wenigstens eine Hydromaschine (4; 6) mit einem verstellbaren Verdrängungsvolumen hat, mit den Schritten:

   - Erfassen einer Ist-Geschwindigkeit ($v_{ist}$) des Fahrzeugs und einer Soll-Geschwindigkeit ($v_{soll}$) des Fahrzeugs;
   - Regeln eines Soll-Verdrängungsvolumens oder eines mechanischen Soll-Äquivalents ($\alpha_{soll}$) in Abhängigkeit der Ist-Geschwindigkeit ($v_{ist}$) des Fahrzeugs und der Soll-Geschwindigkeit ($v_{soll}$) des Fahrzeugs;
   - Kategorisieren des Soll-Verdrängungsvolumens oder des mechanischen Soll-Äquivalents ($\alpha_{soll}$) anhand eines Grenzwerts; und wahlweise
   - bei einer Kategorisierung des Soll-Verdrängungsvolumens in eine erste Kategorie, Regeln einer Betriebsgröße des hydraulischen Antriebs (1) in Abhängigkeit eines Ist-Werts der Betriebsgröße ($p_{ist}$) und des Grenzwerts; oder
   - bei einer Kategorisierung des Soll-Verdrängungsvolumens in eine von der ersten Kategorie unterschiedliche zweite Kategorie, Regeln der Betriebsgröße in Abhängigkeit des Ist-Werts der Betriebsgröße ($p_{ist}$) und entweder des Soll-Verdrängungsvolumens oder des mechanischen Soll-Äquivalents ($\alpha_{soll}$).

2. Verfahren nach Anspruch 1, wobei für das Kategorisieren des Soll-Verdrängungsvolumens oder des mechanischen Soll-Äquivalents ($\alpha_{soll}$)

   das Soll-Verdrängungsvolumen oder das mechanische Äquivalent ($\alpha_{soll}$) in ein bezüglich der Betriebsgröße dimensionsgleiches Betriebsgrößen-Äquivalent umgerechnet wird und
   der Grenzwert bezüglich der Betriebsgröße dimensionsgleich ist.

3. Verfahren nach Anspruch 2, wobei für das Kategorisieren des Soll-Verdrängungsvolumens oder des mechanischen Soll-Äquivalents ($\alpha_{soll}$)

das Betriebsgrößen-Äquivalent mit dem Grenzwert verglichen wird,

das Soll-Verdrängungsvolumen oder das mechanische Äquivalent ($\alpha_{soll}$) der ersten Kategorie zugeordnet wird, wenn das Betriebsgrößen-Äquivalent größer oder gleich dem Grenzwert ist, und

das Soll-Verdrängungsvolumen oder das mechanische Äquivalent ($\alpha_{soll}$) der zweiten Kategorie zugeordnet wird, wenn das Betriebsgrößen-Äquivalent kleiner als der Grenzwert ist.

4. Verfahren nach einem der Ansprüche 1 bis 3, wobei die Betriebsgröße ein Druck der Hydromaschine oder ein Differenzdruck $\Delta p$) über die Hydromaschine (4) ist.

5. Verfahren nach einem der Ansprüche 1 bis 3, wobei für das Regeln des Soll-Verdrängungsvolumens oder des mechanischen Soll-Äquivalents ($\alpha_{soll}$)

aus der Soll-Geschwindigkeit ($v_{soll}$) des Fahrzeugs eine erste Ableitung ($\dot{v}_{soll}$) der Soll-Geschwindigkeit ($v_{soll}$) und eine zweite Ableitung ($\ddot{v}_{soll}$) der Soll-Geschwindigkeit ($v_{soll}$) berechnet wird,

aus der Soll-Geschwindigkeit ($v_{soll}$) des Fahrzeugs, der ersten Ableitung ($\dot{v}_{soll}$) der Soll-Geschwindigkeit ($v_{soll}$) und der zweiten Ableitung ($\ddot{v}_{soll}$) der Soll-Geschwindigkeit ($v_{soll}$) mittels eines inversen Modells (26) des Fahrzeugs das Soll-Verdrängungsvolumen oder das mechanische Soll-Äquivalent ($\alpha_{soll}$) berechnet wird und

Abweichungen zwischen der Ist-Geschwindigkeit ($v_{ist}$) und der Soll-Geschwindigkeit ($\alpha_{soll}$) mittels eines Reglers (28) ausgeregelt wird, dessen Ausgang vor dem inversen Modell (26) des Fahrzeugs auf die zweite Ableitung ($\ddot{v}_{soll}$) der Soll-Geschwindigkeit ($v_{soll}$) aufgerechnet wird.

6. Verfahren nach Anspruch 5, wobei der Regler (28) für das Ausregeln von Abweichungen zwischen der Ist-Geschwindigkeit ($v_{ist}$) und der Soll-Geschwindigkeit ($v_{soll}$) ein PID-Regler mit Anti-Wind-Up ist.

7. Steuereinheit (8), die dazu eingerichtet ist, ein Verfahren nach einem der Ansprüche 1 bis 6 durchzuführen, mit

einem Geschwindigkeitsregler (18) zum Regeln des Soll-Verdrängungsvolumens oder des mechanischen Soll-Äquivalents ($\alpha_{soll}$) in Abhängigkeit der Ist-Geschwindigkeit ($v_{ist}$) des Fahrzeugs und der Soll-Geschwindigkeit ($v_{soll}$) des Fahrzeugs, und

einem Pumpenregler (20) zum Regeln der Betriebsgröße des hydraulischen Antriebs (1) in Abhängigkeit des Ist-Werts der Betriebsgröße ($p_{ist}$) und wahlweise des Grenzwerts oder entweder des Soll-Verdrängungsvolumens oder des mechanischen Soll-Äquivalents ($\alpha_{soll}$).

8. Steuereinheit (8) nach Anspruch 7, wobei

der Geschwindigkeitsregler (18) einen Trajektorienplaner (30), ein inverses Modell (26) des Fahrzeugs und einen Regler (28) aufweist,

der Trajektorienplaner (30) ausgebildet ist, aus der Soll-Geschwindigkeit ($v_{soll}$) des Fahrzeugs eine erste Ableitung ($\dot{v}_{soll}$) der Soll-Geschwindigkeit ($v_{soll}$) und eine zweite Ableitung ($\ddot{v}_{soll}$) der Soll-Geschwindigkeit ($v_{soll}$) berechnen zu können,

das inverse Modell (26) des Fahrzeugs ausgebildet ist, aus der Soll-Geschwindigkeit ($v_{soll}$) des Fahrzeugs, der ersten Ableitung ($\dot{v}_{soll}$) der Soll-Geschwindigkeit ($v_{soll}$) und der zweiten Ableitung ($\ddot{v}_{soll}$) der Soll-Geschwindigkeit ($v_{soll}$) das Soll-Verdrängungsvolumen oder das mechanische Soll-Äquivalent ($\alpha_{soll}$) berechnen zu können, und

der Regler (28) ausgebildet ist, Abweichungen zwischen der Ist-Geschwindigkeit ($v_{ist}$) und der Soll-Geschwindigkeit ($v_{soll}$) ausregeln zu können und einen Ausgang des Reglers (28) vor dem inversen Modell (26) des Fahrzeugs auf die zweite Ableitung ($\ddot{v}_{soll}$) der Soll-Geschwindigkeit ($v_{soll}$) aufzurechnen.

9. Computerprogramm, um einen Prozessor mit Hardware zu den Schritten nach einem der Ansprüche 1 bis 6 zu veranlassen.

10. Maschinenlesbares Speichermedium mit einem darauf gespeicherten Computerprogramm nach Anspruch 9.

Fig. 1

Fig. 2

Fig. 3

Europäisches
Patentamt

European
Patent Office

Office européen
des brevets

**EUROPÄISCHER RECHERCHENBERICHT**

**Nummer der Anmeldung**

**EP 22 20 4441**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 221943 A1 (ZAHNRADFABRIK FRIEDRICHSHAFEN [DE]) 5. Juni 2014 (2014-06-05) | 1,4,7,9, 10 | INV. F16H61/4008 F16H61/421 |
| A | * Absätze [0002], [0013], [0014], [0018], [0019], [0041]; Abbildungen * ----- | 2,3,5,6, 8 | F16H61/431 F16H61/47 |
| X | DE 10 2010 052065 A1 (BOSCH GMBH ROBERT [DE]) 10. Mai 2012 (2012-05-10) | 1,4,7,9, 10 | |
| A | * Absätze [0029] – [0037]; Abbildungen * ----- | 2,3,5,6, 8 | |

**RECHERCHIERTE SACHGEBIETE (IPC)**

F16H
B60W

Der vorliegende Recherchenbericht wurde für alle Patentansprüche erstellt

| Recherchenort | Abschlußdatum der Recherche | Prüfer |
|---|---|---|
| München | 20. März 2023 | Meritano, Luciano |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 20 4441

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2023

| Im Recherchenbericht angeführtes Patentdokument | Datum der Veröffentlichung | Mitglied(er) der Patentfamilie | Datum der Veröffentlichung |
|---|---|---|---|
| DE 102012221943 A1 | 05-06-2014 | KEINE | |
| DE 102010052065 A1 | 10-05-2012 | DE 102010052065 A1 | 10-05-2012 |
| | | WO 2012059177 A1 | 10-05-2012 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013213896 A1
- DE 102013217708 A1
- DE 102015207258 A1
- DE 102019210003 A1